Europäisches Patentamt

European Patent Office

Office européen des brevets

(11) Veröffentlichungsnummer: **0 353 181**
**A2**

## (12) EUROPÄISCHE PATENTANMELDUNG

(21) Anmeldenummer: 89730172.7

(22) Anmeldetag: 25.07.89

(51) Int. Cl.5: **E 21 B 17/042**
**F 16 L 15/00**

(30) Priorität: 28.07.88 DE 3825995

(43) Veröffentlichungstag der Anmeldung:
**31.01.90 Patentblatt 90/05**

(84) Benannte Vertragsstaaten:
**AT DE ES FR GB GR IT NL**

(71) Anmelder: MANNESMANN Aktiengesellschaft
**Mannesmannufer 2**
**D-4000 Düsseldorf 1 (DE)**

(72) Erfinder: Pfeiffer, Gerd, Dr.-Ing.
**Im Look 55**
**D-4330 Mülheim (DE)**

Quadflieg, Erich, Dr.-Ing.
**Grotenburgstrasse 209**
**D-4150 Krefeld (DE)**

Lenze, Friedrich, Dr.-Ing.
**Tiefenbroicher Strasse 76**
**D-4030 Ratingen 4 (DE)**

Krug, Gerhard, Dr.-Ing.
**Beim Gansacker 26**
**D-4100 Duisburg 25 (DE)**

Siekmeyer, Josef, Dipl.-Ing.
**Kalkstrasse 3a**
**D-4030 Ratingen 4 (DE)**

(74) Vertreter: Presting, Hans-Joachim, Dipl.-Ing. et al
**Meissner & Meissner Patentanwaltsbüro Herbertstrasse 22**
**D-1000 Berlin 33 (DE)**

(54) **Bohrrohrverbindung.**

(57) Die Erfindung betrifft eine Bohrrohrverbindung mit einem Verbindungsnippel, der einen über eine bestimmte Länge sich erstreckenden, gewindefreien verdickten Mittelteil mit je einer Außenschulter und rechts und links davon je einen gleich ausgebildeten, ein kegeliges Außengewinde tragenden Gewindeabschnitt aufweist, der mit dem komplementär dazu ausgebildeten Innengewindeabschnitt eines als Muffenelement ausgebildeten Rohrendes verschraubbar ist und das stirnseitige Rohrende im verschraubten Zustand dichtend an der Außenschulter des Mittelteiles liegt.

Mit der Erfindung wird eine Bohrrohrverbindung für extreme Tiefbohrungen geschaffen, die unter Einhaltung wesentlicher nach Norm vorgeschriebener Abmessungen gewichtsoptimiert ein besseres dynamisches Verhalten zeigt als entsprechende Standardverbindungen mit angeschweißten Verbindern, kostengünstiger herzustellen ist und länger den Betriebsbeanspruchungen standhält.

Fig.1

**Beschreibung**

**Bohrrohrverbindung**

Die Erfindung betrifft eine Bohrrohrverbindung gemäß dem Gattungsbegriff des Hauptanspruches.

Eine solche Rohrverbindung ist aus der US 1,932,427 bekannt. Diese Schrift befaßt sich mit einer glattbündigen Verbindung mit einem Verbindungsnippel, dessen als Zapfelement ausgebildeten Gewindeabschnitte ein zweistufiges kegeliges Gewinde aufweisen. Das als Muffenelement ausgebildete Rohrende weist eine Außen- und eine Innenschulter auf, die im verschraubten Zustand dichtend an der jeweiligen komplementär dazu ausgebildeten Schulter des Verbindungsnippels anliegt. Nachteilig bei diesem Lösungsvorschlag ist die starke radiale Innenanstauchung im Anstauchkopf des Rohres, die das dynamische Verhalten der Verbindung stark verschlechtert. Damit ist diese Verbindung für extreme Tiefbohrungen nicht geeignet. Außerdem muß auf jedes Rohr beim Einbau ein Hebenippel aufgeschraubt und nach dem Absenken wieder entfernt werden. Eine alternativ mögliche Klemmvorrichtung an der Außenseite der glattbündigen Verbindung zum Halten des Stranges während des Absenkens führt leicht zu einer Beschädigung der Außenoberfläche und vermindert damit die Einsatzdauer des Bohrgestänges.

Aufgabe der vorliegenden Erfindung ist es, eine Bohrrohrverbindung für extreme Tiefbohrungen zu schaffen, die unter Einhaltung wesentlicher nach Norm vorgeschriebener Abmessungen gewichtsoptimiert ein besseres dynamisches Verhalten zeigt als eine entsprechende Standardverbindung mit angeschweißten Verbindern, kostengünstiger herzustellen ist und länger den Betriebsbeanspruchungen standhält.

Diese Aufgabe wird durch die kennzeichnenden Merkmale des Hauptanspruches gelöst. Vorteilhafte Weiterbildungen sind in den Unteransprüchen festgelegt.

Die vorgeschlagene Bohrrohrverbindung zeichnet sich dadurch aus, daß die Querschnittsübergänge dynamisch gleichwertig gestaltet sind. Dies wird dadurch erreicht, daß der Sprung von der Ausgangswanddicke des unverformten Rohres zum verdickten Zangenanschlagsbereich des Anstauchkopfes nur in kleinen Stufen und mit abgerundeten Übergängen erfolgt. Dabei ist die radiale Innenanstauchung gering und liegt bei einem Wert gleich kleiner 7 %. Ebenso erfolgt die Zunahme des Außendurchmessers im Anstauchbereich des Rohres vom Ausgangswert der Nennabmessung bis zu einem etwas unterhalb liegenden entsprechend der Norm vorgeschriebenen Maximalwert in Form einer Schräge. Diese zusätzlich zur radialen Innenanstauchung radiale Außenanstauchung verstärkt die Wanddicke in dem kritischen Bereich des Beginns der Elevatorschulter und der Querschnitt in diesem Bereich ist mindestens um 30 % größer als der des unverformten Rohres.

Ein weiterer Vorteil ist darin zu sehen, daß der Außendurchmesser des Mittelteiles größer ist als der Muffenteil der angrenzenden Rohre, so daß die Verschleißstelle, hervorgerufen durch die Kontaktberührung des Gestänges mit der Bohrlochwand, gezielt auf ein leicht austauschbares Element gelegt wird. Zusätzlich kann in bekannter Weise auf diese Außenfläche eine verschleißfeste Panzerung aufgebracht werden. Auf diese Weise wird der Austausch der teueren Bohrrohre weitgehend vermieden.

Mit der vorgeschlagenen Bohrrohrverbindung wird die Lebensdauer der Gestängerohre erheblich vergrößert. Wie bekannt, wird das Bohrgestänge nach jedem Absenken einer Rohrlänge in Keilen abgefangen.

Diese Stelle am Rohr, an der die Keile anfassen, ist eine Verschleißstelle, da bei jeder Entschraubung bzw. Wiederverschraubung mehr oder weniger die fast gleiche Stelle von dieser Vorrichtung gefaßt wird. Da das Rohr an beiden Enden gleichartig ausgebildet ist, kann es auch um 180 Grad gedreht werden, so daß eine neue Stelle der Rohroberfläche mit den Keilen in Verbindung kommt. Das gleiche gilt auch für den Verschleiß des Gewindeabschnittes an der Entschraubungs- bzw. Wiederverschraubungsstelle. Bevor der kritische Verschleißzustand für einen vollständigen Austausch erreicht ist, wird das Rohr um 180 Grad gedreht und der bisher erst einmal verschraubte Gewindeabschnitt wird an diese Entschraubungsstelle gesetzt.

Die Gewindeabschnitte des Verbindungsmittels und der Rohre weisen vorzugsweise ein Gewinde entsprechend der API-Norm auf. Damit ist eine hohe Austauschbarkeit gewährleistet, da auch anders gestaltete Rohre und Zubehörteile mit Gewinde nach API-Norm mit einer solchen Verbindung verschraubt werden können.

Die axiale Erstreckung des verdickten Mittelteiles wird so kurz wie möglich gewählt, um an Gewicht zu sparen. Üblicherweise ist sie aber etwas länger als für das Anfassen der Zange erforderlich wäre, damit das verschlissene Gewinde noch nachgeschnitten werden kann. Die Bohrungs-und Außenmaße des Verbindungsnippels entsprechen standardmäßig der API-Norm. Das gilt auch für die Abschrägung an den beiden Enden des Mittelteiles.

Die neue vorgeschlagene Bohrrohrverbindung ist bezüglich der statischen Belastbarkeit gleichwertig einer Standard-API-Verbindung mit angeschweißten Verbindern. Sie ist aber im dynamischen Verhalten von Vorteil, wegen der besseren abgestimmten Querschnittsübergänge und durch den Wegfall der Schweißnaht ist sie weniger anfällig hinsichtlich eines Korrosionsangriffes durch Schwefelwasserstoff. Ein Vorteil bei der Herstellung der vorgeschlagenen Bohrrohrverbindung ergibt sich dadurch, daß trotz der doppelten Anzahl der erforderlichen Gewinde durch den Wegfall der Naht und aller damit verbundenen Arbeiten ein größerer technischer Aufwand eingespart wird.

In der Zeichnung wird anhand eines Ausführungsbeispieles die erfindungsgemäße Bohrrohrverbindung näher erläutert. Es zeigt:

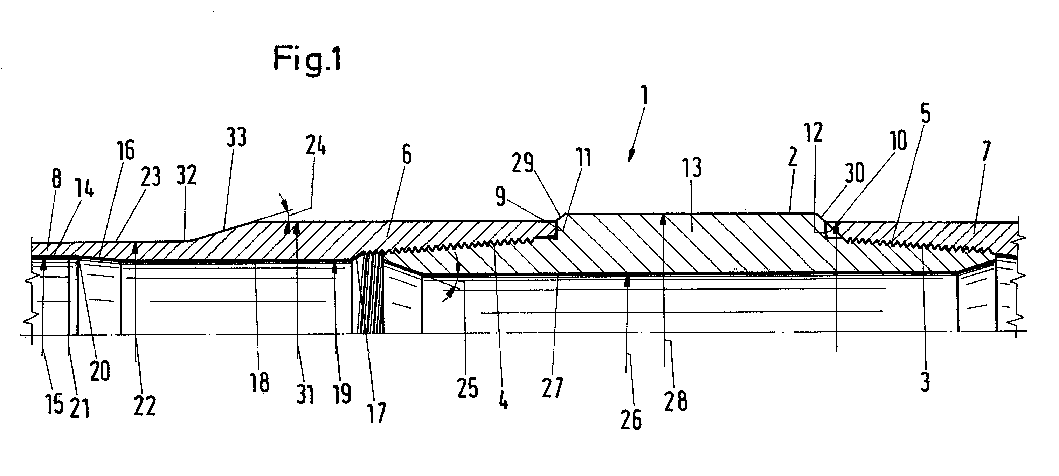

Figur 1 einen hälftigen Längsschnitt durch die erfindungsgemäße Bohrrohrverbindung

Figur 1 zeigt einen hälftigen Längsschnitt durch die erfindungsgemäße Bohrrohrverbindung 1. Diese besteht aus einem Verbindungsnippel 2 mit zwei kegelig ausgebildeten Gewindeabschnitten 3,4, die mit den komplementär dazu ausgebildeten Gewindeabschnitten 5,6 der beiden Rohre 7,8 verschraubbar sind. Die Enden der Rohre 7,8 sind angestaucht und die stirnseitigen Flächen 9,10 des als Muffenelement ausgebildeten Rohrendes liegen im verschraubten Zustand dichtend an der Außenschulter 11,12 des Mittelteiles 13 des Verbindungsnippels 2 an. Der zylindrischen Bohrung 14 des unverformten Rohres 8, dessen lichte Weite mit Pfeil 15 gekennzeichnet ist, folgt ein Zwischenabschnitt 16, dessen lichte Weite in Richtung Gewindeverbindung abnimmt. Daran schließt sich eine bis zum Auslauf 17 des Gewindeabschnittes 6 sich erstreckende zylindrische Bohrung 18 an, dessen lichte Weite durch den Pfeil 19 gekennzeichnet ist. Der Übergang 20 von der zylindrischen Bohrung 15 des unverformten Rohres 8 zum Zwischenabschnitt 16 ist stark abgerundet.

Auf der Außenseite nimmt der Außendurchmesser (hier gekennzeichnet durch den Pfeil 21) vom unverformten Rohr 8 in Richtung Elevatorschulter 33 stetig zu, wobei der größte Wert, hier dargestellt durch den Pfeil 22, etwas unterhalb des zulässig nach Norm vorgeschriebenen Maximalwertes liegt. Die axiale Erstreckung des Außenbereiches 23 ist größer als der nahezu gegenüberliegende Zwischenabschnitt 16. Die Elevatorschulter 33 ist standardmäßig um 18 Grad geneigt. Die Winkellage wird durch den Pfeil 24 angezeigt. Die als Zapfenelement ausgebildeten Gewindeabschnitte 3,4 des Verbindungsnippels 2 sind radial nach innen verdickt und die Enden sind um weniger als 30 Grad abgeschrägt. Die Winkellage dieser Abschrägung zeigt Pfeil 25. Die lichte Weite 26 der zylindrischen Bohrung 27 des Verbindungsnippels 2 und der Außendurchmesser 28 des Mittelteiles 13 sowie die Abschrägung 29,30 an den Enden des Mittelteiles 13 entsprechen vorzugsweise der API-Norm. Erfindungswesentlich dabei ist, daß der Außendurchmesser 28 des Mittelteiles 13 größer ist als der 31 des Muffenteiles. Damit wird die Verschleißzone in ein leicht austauschbares Teil gelegt.

## Patentansprüche

1. Bohrrohrverbindung mit einem Verbindungsnippel, der einen über eine bestimmte Länge sich erstreckenden, gewindefreien verdickten Mittelteil mit je einer Außenschulter und rechts und links davon je einen gleich ausgebildeten, ein kegeliges Außengewinde tragenden Gewindeabschnitt aufweist, der mit dem komplementär dazu ausgebildeten Innengewindeabschnitt eines als Muffenelement ausgebildeten Rohrendes verschraubbar ist und das stirnseitige Rohrende im verschraubten Zustand dichtend an der Außenschulter des Mittelteiles anliegt,
**dadurch gekennzeichnet,**

daß das angestauchte Rohrende eine an die zylindrische Bohrung (14) des unverformten Rohres (8) anschließenden Zwischenabschnitt (16) mit einer in Richtung Gewindeverbindung abnehmenden lichten Weite aufweist, dem sich ein bis zum Auslauf (17) des Innengewindeabschnittes (5,6) erstreckender zylindrischer Bohrungsabschnitt (18) anschließt und der Übergang von der zylindrischen Bohrung (14) des unverformten Rohres (8) in den Zwischenabschnitt (16) stark abgerundet (20) ist und der Außendurchmesser des Rohres im Bereich Elevatorschulter (33) gleich oder größer ist als der (21) des unverformten Rohres (8), wobei die Erstreckung dieses Bereiches (23) größer ist als der des innen liegenden Zwischenabschnittes (16) und daß die als Zapfenelement ausgebildeten Gewindeabschnitte (3,4) des Verbindungsnippels (2) radial nach innen verdickt sind und die Enden eine zur Mitte weisende Abschrägung aufweisen und der Außendurchmesser (28) des Mittelteiles des Verbindungsnippels (2) größer ist als der (31) an der Schulter (10,11) anliegende Muffenteil des jeweiligen Rohres (7,8).

2. Rohrgewindeverbindung nach Anspruch 1,
**dadurch gekennzeichnet,**
daß die axiale Erstreckung des Mittelteiles (13) des Verbindungsnippels (2) gleich oder größer ist als das erforderliche Mindestmaß für den Zangenanschlag.

3. Rohrgewindeverbindung nach Anspruch 1,
**dadurch gekennzeichnet,**
daß der Außendurchmesser des Rohres im Anstauchbereich (23) bis etwas unterhalb eines nach Norm vorgeschriebenen Maximalwertes zunimmt.

4. Bohrrohrverbindung nach Anspruch 1,
**dadurch gekennzeichnet,**
daß die Gewindeabschnitte (3,4) des Verbindungsnippels (2) und der (5,6) zu verbindenden Rohre (7,8) vorzugsweise ein Standard-API-Gewinde aufweisen.

5. Bohrrohrverbindung nach Anspruch 1,
**dadurch gekennzeichnet,**
daß der Sprung in der lichten Weite von der zylindrischen Bohrung (15) des unverformten Rohres (8) zur zylindrischen Bohrung (18) des Anstauchkopfes gering ist und bei einem Wert gleich kleiner 7 % liegt.

6. Bohrrohrverbindung nach Anspruch 1,
**dadurch gekennzeichnet,**
daß die Elevatorschulter (33) standardmäßig um 18 Grad geneigt (24) ist.

7. Bohrrohrverbindung nach den Ansprüchen 1 und 6,
**dadurch gekennzeichnet,**
daß der Querschnitt am Anfang (32) der Elevatorschulter (33) mindestens um 30 % größer ist als der des unverformten Rohres (8).

8. Bohrrohrverbindung nach Anspruch 1,
**dadurch gekennzeichnet,**
daß die lichte Weite der zylindrischen Bohrung (26) und der Außendurchmesser (28), sowie die Abschrägung (29,30) an den Enden des Mittelteiles (13) des Verbindungsnippels (2) vorzugsweise der API-Norm entspricht.

9. Bohrrohrverbindung nach Anspruch 1, **dadurch gekennzeichnet,** daß das Mittelteil (13) auf der Außenseite eine aufgebrachte verschleißfeste Panzerung aufweist.

Fig.1